# EUROPEAN PATENT APPLICATION

(11) **EP 4 245 638 A1**
(43) Date of publication of application: **20.09.2023**
(21) Application number: 23161878.6
(22) Date of filing: 14.03.2023
(51) Int. Cl.: B62B 9/22

(54) **APPARATUS FOR ROCKING A PUSHCHAIR**

(30) Priority: 14.03.2022 GB 202203495
(71) Applicant: Frankham, Neil, Leicestershire LE86UE (GB)
(72) Inventor: Frankham, Neil, Leicestershire LE86UE (GB)
(74) Representative: Carpmaels & Ransford LLP

(57) **Abstract**

There is provided an apparatus for moving a movable vehicle or housing, such as a pram or pushchair.

## Description

### Field of the Invention

The present invention relates to apparatuses for moving a movable vehicle or housing, for example in childcare, in particular apparatuses for moving a pram or pushchair.

### Background of the Invention

Many parents/guardians transport their baby or child in a pram or pushchair to save carrying the baby or child, or walking the baby or child.

Not only this, many babies and children find transport in a pram or pushchair to be soothing and relaxing, meaning that parents/guardians often use transport or keeping in a pram or pushchair as a means of encouraging the baby or child to sleep or remain calm.

However, manual movement of a pram or pushchair can often be inconvenient for the parent/guardian, for example in social situations (pubs, restaurants, public transport, etc.) or even within the home. For this reason, parents/guardians are often compromised in their ability to soothe the baby or child as they would wish, given their extra responsibilities or activities in that moment.

The present invention provides a solution to these problems and allows parents/guardians increased flexibility in using prams or pushchairs, as well as in other fields.

It will be understood that the invention can also be used for non-human purposes, for example in moving animals, where similar considerations apply.

### Summary of the Invention

In accordance with the present invention, there is provided an apparatus comprising an engagement member configured to engage a movable vehicle or housing, such as a pram or pushchair, to move the movable vehicle or housing.

When the movable vehicle or housing is a pram or pushchair (e.g. for carrying a baby or child), the invention therefore provides a way of moving and soothing the baby or child and inducing subliminally a soporific effect without the need for a parent or guardian to carry out this act manually. This relieves the parent or guardian of that particular responsibility whilst ensuring that the baby or child is happy, content and relaxed. Alternatively or additionally, the movable vehicle or housing may be a housing for attachment to a fixed structure, for example a fixed structure on a larger means of transport (e.g. a part of a car, train or aeroplane), or a table or other surface in this or any other environment (e.g. a table in a restaurant or home) where such an effect is, again, desirable and helpful.

The invention can also be used for non-human purposes, for example in moving a vehicle or housing for carrying an animal (e.g. a dog or any other animal in which this would be appropriate or helpful).

The apparatus may further comprise a substrate, wherein the engagement member may be mounted upon the substrate. The engagement member may be movable relative to the substrate. Alternatively, the substrate may be movable and the engagement member may be fixedly mounted on the substrate. The engagement member may be attached to the substrate (e.g. by screws, nails, etc. or using an adhesive). Alternatively, the engagement member may be intergrally-formed (e.g. moulded) with the substrate. A portion of the apparatus, or part of the apparatus, may be 3-D printed.

The engagement member may be configured to move the movable vehicle or housing in a repeated and/or regular and/or consistent motion.

Repeated and/or regular and/or consistent motions such as those described herein have been shown to be particularly soothing and comforting (e.g. to children or babies, or animals).

The engagement member may be configured to move the movable vehicle or housing in a circular motion, an elliptical motion or an oval-shaped motion. Such motion has been shown to be particularly soothing and comforting (e.g. to children or babies, or animals).

The engagement member and/or the substrate may comprise a ramped or angled surface, or a wedge shape. Such shapes allow for a solid and reliable engagement with the movable vehicle or housing (e.g. a pram or pushchair), whilst optionally also offering a margin for error with that engagement. The engagement member and/or the substrate may additionally or alternatively comprise a curved or concave surface, for example a curved or concave surface for engagement with the movable vehicle or housing. Such a curved or concave surface may improve the engagement with the movable vehicle or housing to ensure reliable and steady movement of the movable vehicle or housing.

The engagement member and/or the substrate may be powered by a motor, for example an AC motor, a DC motor, a brushless motor, a brushed motor, a servo motor or a stepper motor. Such motors ensure consistent and reliable movement of the engagement member and relieve a manual user of the responsibility of carrying out this act themselves. The engagement member and/or the substrate may additionally or alternatively be powered by any other means, for example using a renewable source of energy. The energy source may additionally or alternatively be intermittent, in which case an energy storage means (e.g. a battery) may be used in combination with the energy source.

The engagement member and/or the substrate may be rotatable about a first axis. The first axis may be perpendicular to a direction of motion of the engagement member and/or the substrate. For example, if the engagement member and/or the substrate move in a linear, circular, elliptical or oval-shaped motion, the first axis may be perpendicular to this motion. For example, if the engagement member and/or the substrate move along traditional x- and/or y-axes, the first axis may be along a z-axis. This also ensures reliable, safe and soothing motion, as well as space-saving. The apparatus may further comprise an axle or shaft upon which the engagement member and/or the substrate are mounted, wherein the axle or shaft may extend along the first axis. This provides solidity and further reliability.

The engagement member may be configured to be indirectly coupled to the movable vehicle or housing (e.g. a wheel, axle, frame or any other part of the movable vehicle or housing), for example by exerting a force on the movable vehicle or housing to move the movable vehicle or housing. In this way, the apparatus does not need any extra connection mechanism for the engagement member to be able to move the movable vehicle or housing. This enhances the ease of use of the apparatus.

Alternatively, the engagement member may be configured to be directly coupled to the movable vehicle or housing (e.g. a wheel, axle, frame or any other part of the movable vehicle or housing), for example by being mounted to a shaft, wheel or frame of the movable vehicle or housing. Although this requires extra coupling and time on the part of the user, some users (in some situations) may prefer to have a direct coupling between the engagement member and the movable vehicle or housing (for example in a moving larger vehicle or on unsteady ground). The direct coupling may be achieved by means of a clip, latch, hook, or any other suitable means. The direct coupling may also be achieved by shaping the engagement member so that it directly couples to the movable vehicle or housing, for example by the engagement member partially or wholly surrounding a portion of the movable vehicle or housing.

The apparatus may further comprise a retaining member configured to hold a portion of a movable vehicle or housing in place to allow the engagement member to move the movable vehicle or housing, or to assistant the engagement member in doing so. The retaining member may be mounted upon the substrate. The retaining member may be a plate, lug, disc or any other structure. The retaining member may extend perpendicularly, or substantially perpendicularly, to the substrate.

### Brief Description of the Drawings

The present invention will now be described with reference to the accompanying drawings, in which:
Fig. 1 shows a perspective view of an apparatus according to the invention;
Fig. 2 shows a side view of an apparatus according to the invention in a first position;
Fig. 3 shows a side view of an apparatus according to the invention in a second position;
Fig. 4 shows a side view of an apparatus according to the invention in a third position;
Fig. 5 shows a side view of an apparatus according to the invention in a fourth position; and
Fig. 6 shows an embodiment of the apparatus of the invention with a movable vehicle or housing attached (for example a pram or pushchair).

### Detailed Description

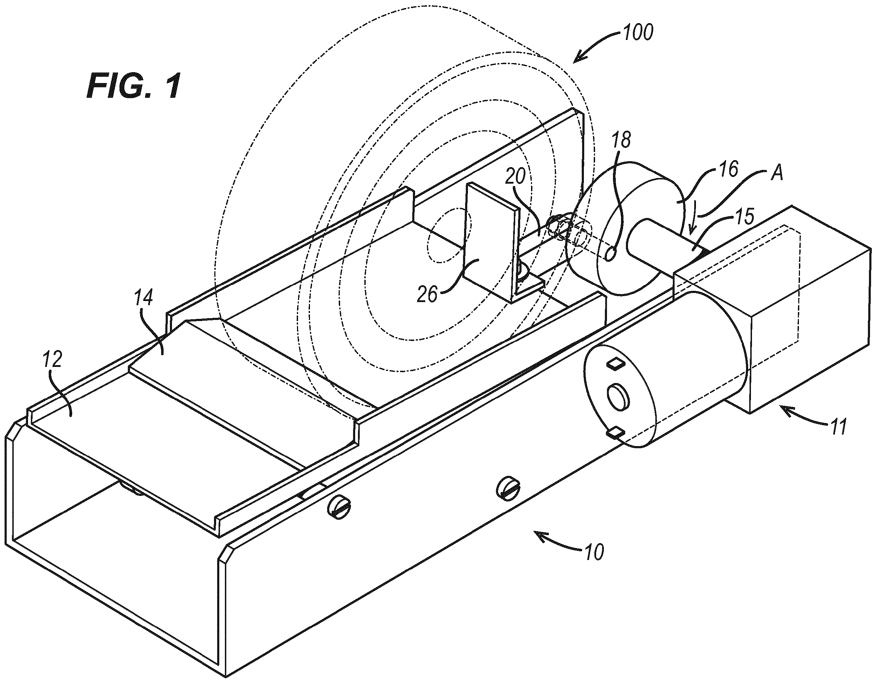

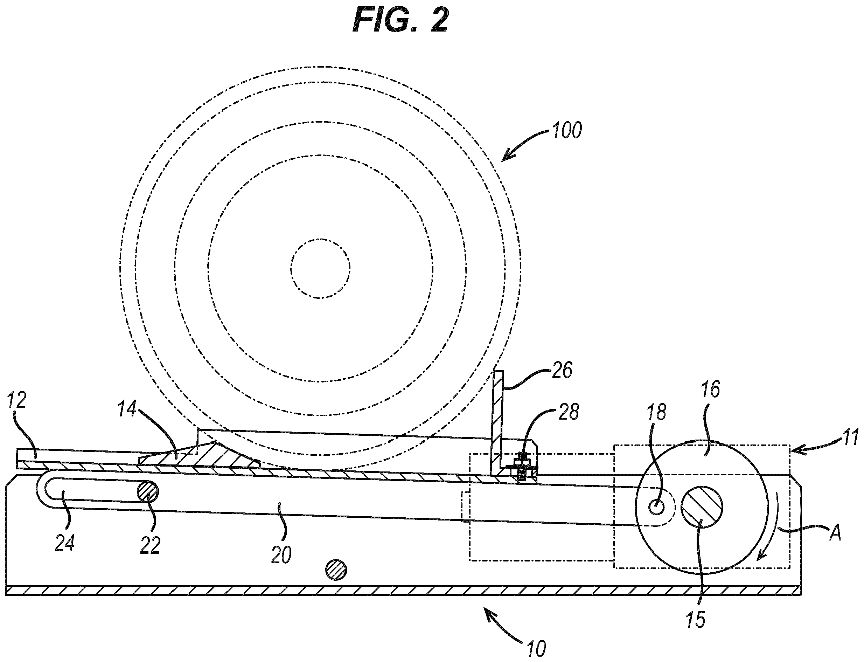

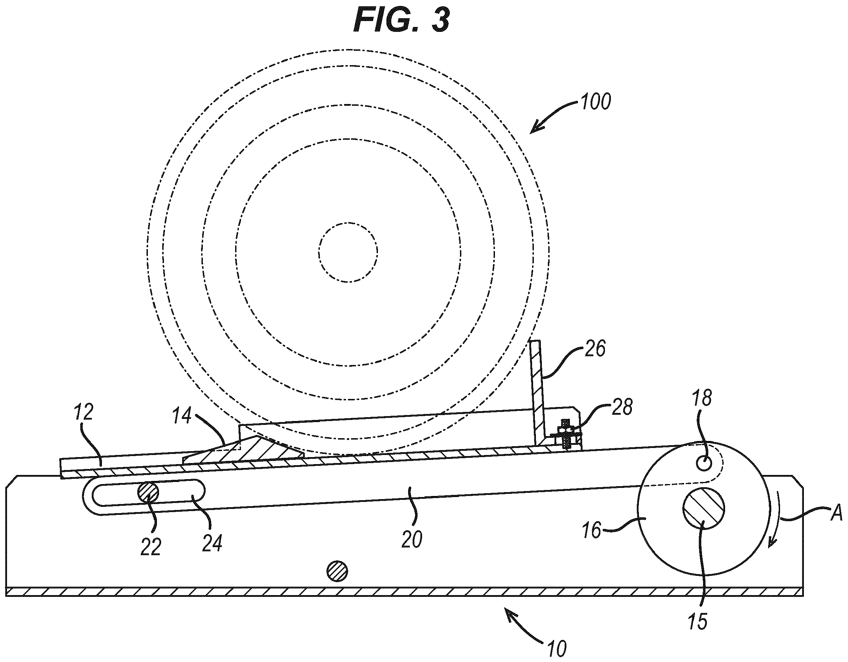

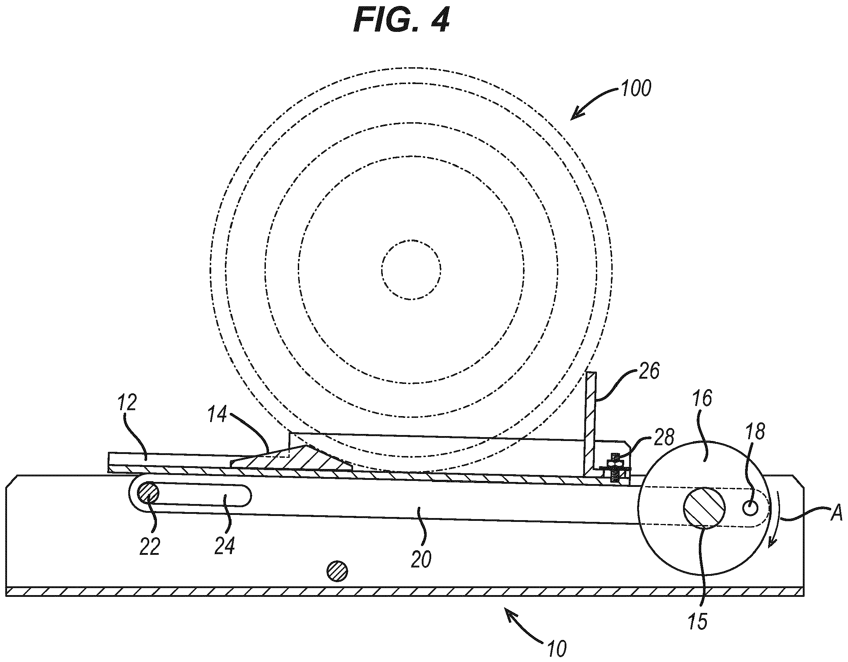

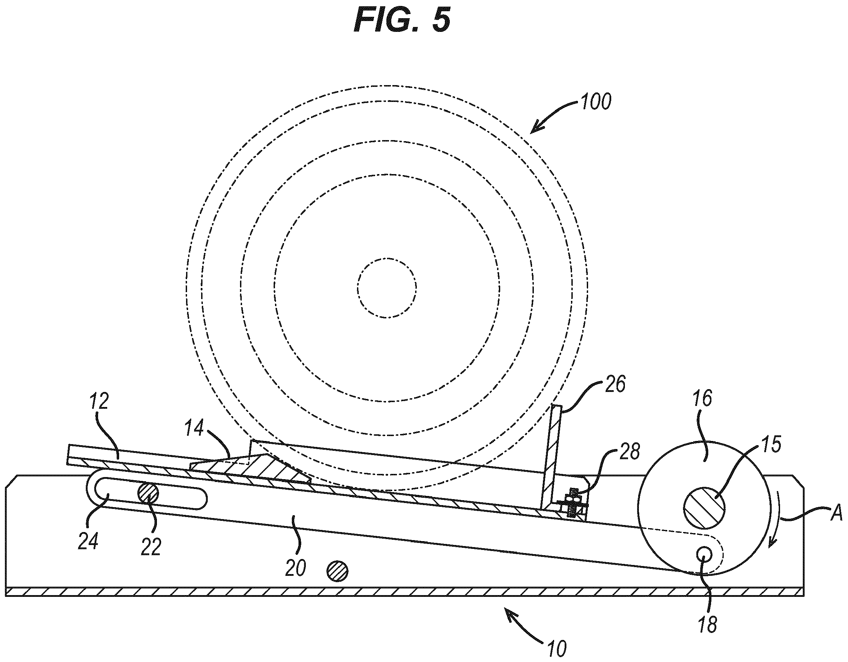

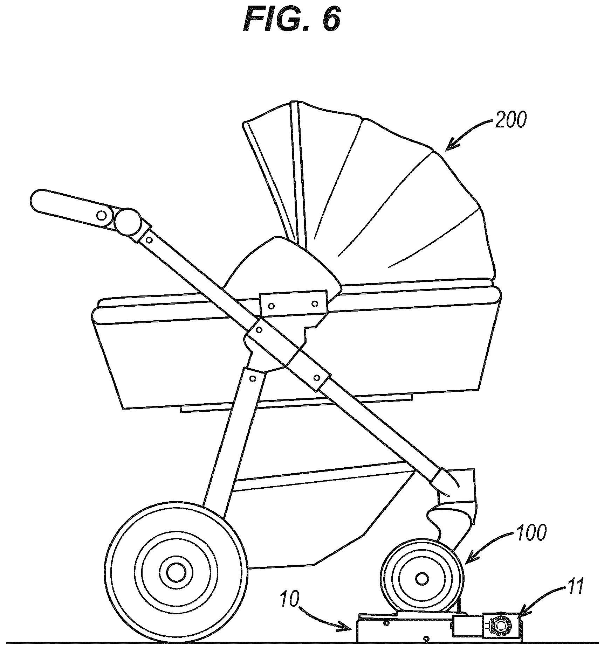

Fig. 1 shows a perspective view of an apparatus 10 according to the invention. Figs. 2, 3, 4 and 5 show side views of the apparatus 10 in different sequential positions during operation of the apparatus 10. Fig. 6 shows the apparatus 10 with a movable vehicle or housing attached or coupled to it (in the case of Fig. 6, a pram or pushchair 200).

As shown in Figs. 1 to 6, the apparatus 10 is configured to engage and move a movable vehicle or housing, for example a pram or pushchair 200, by means of an engagement member 14. The engagement member 14 is mounted upon a substrate 12.

In the embodiments shown in Figs. 1 to 6, the engagement member 14 is fixedly mounted on or attached to the substrate 12 and the substrate 12 is movable, as described in further detail below. In other embodiments (not shown), the substrate 12 can remain stationary and the engagement member 14 is then movable relative to the substrate 12 to move the movable vehicle or housing 200. It will be understood that the same means can be used to move the substrate 12 as to move the engagement member 14, or alternative means can be used. Of course, both the engagement member 14 and the substrate 12 can be movable.

Whichever part is responsible for the movement, it is an aim of the invention to move the movable vehicle or housing 200 in a repeated and/or regular and/or consistent motion, such as a circular motion, an elliptical motion, an oval-shaped motion or any other suitable motion (particularly repeated or reciprocal motion).

It can be seen from Figs. 1 to 6 that the engagement member 14 comprises a ramped or angled surface, or a "wedge" shape. The particular example of the engagement member 14 shown in Figs. 1 to 6 has two ramped or angled surfaces (opposing one another), but it will be understood that a single angled or ramped surface can be used (particularly a surface that engages the movable vehicle or housing 200) or any other number of ramped or angled surfaces. In other embodiments (not shown), the engagement member 14 and/or the substrate 12 comprises a curved or concave surface.

It will now be described how the particular embodiments shown in Figs. 1 to 6 move the movable vehicle or housing. It will be understood that other arrangements are envisaged within the scope of the claims.

The apparatus 10 shown in Figs. 1 to 6 comprises a motor 11. In the embodiments shown in Figs. 1 to 6, the substrate 12 is powered or driven by the motor 11, but it will be understood that the substrate 12 can remain stationary and the engagement member 14 can move relative to the substrate 12, for example by being driven by a similar motor 11. The motor 11 may be an AC motor, a DC motor, a brushless motor, a brushed motor, a servo motor or a stepper motor. It will be understood that other means, for example a renewable or intermittent source of energy (for example in combination with a battery), may be used.

In the embodiments shown in Figs. 1 to 6, the motor 11 (or other driving/powering means) is coupled or connected to a wheel or rotator 16 by a drive shaft 15 or any similar suitable connector. In turn, the wheel or rotator 16 is coupled or connected to an arm or lever 20 by a pin 18 that engages the arm or lever 20 (e.g. by extending at least partially or wholly through a hole or aperture in the arm or lever 20).

The pin 18 is located at or towards a first (e.g. proximal) end of the arm or lever 20. At or towards an opposing (e.g. distal) end of the arm or lever 20, the arm or lever comprises a slot 24 within which a slider 22 is configured to move (i.e. slide).

Figs. 2 to 5 show the apparatus 10 in different sequential (i.e. time separated) stages of operation. The rotation of the wheel or rotator 16 (e.g. as driven/powered by the motor 11) in a direction A about a first axis causes the engagement member 14 and the substrate 12 to be moved as the wheel or rotator 16 rotates and the slider 22 consequently moves within the slot 24 in the arm or lever 20. It will be understood that the opposite direction to A or any suitable direction could be used. The first axis is perpendicular to the direction of motion of the engagement member and the substrate.

The engagement member 14 is configured to be indirectly or directly coupled to a portion of the movable vehicle or housing 20. In Figs. 1 to 6, the engagement member 14 exerts a force on the movable vehicle or housing 200 (in Figs. 1 to 6, this is a wheel 100 of the movable vehicle or housing 200) to move the movable vehicle or housing 200 in the manner shown.

The apparatus 10 further comprises a retaining member 26 configured to hold, retain or support a portion (e.g. the wheel 100) of the movable vehicle or housing 200 in place to allow the engagement member 14 to move the movable vehicle or housing 200, or to assistant the engagement member 14 in doing so. In the arrangement shown in Figs. 1 to 6, the retaining member 26 is mounted upon the substrate 12 and is attached thereto by means of a screw 28 (although it will be appreciated that other attachments means, such as welding and moulding, could equally be used, or the retaining member 26 could be intergrally-formed/moulded with the substrate 12). The retaining member 26 is shown as a plate, but a lug, disc or any other suitable structure could equally be used. It can be seen from Figs. 1 to 6 that the retaining member 26 extends perpendicularly, or substantially perpendicularly, to the substrate 12.

The present invention has been described above in exemplary form with reference to the accompanying drawings which represent a single embodiment of the invention. It will be understood that many different embodiments of the invention exist, and that these embodiments all fall within the scope of the invention as defined by the following claims.

## Claims

1. An apparatus comprising an engagement member configured to engage a movable vehicle or housing, such as a pram or pushchair, to move the movable vehicle or housing.

2. The apparatus of claim 1, further comprising a substrate, wherein the engagement member is mounted upon the substrate.

3. The apparatus of claim 2, wherein the engagement member is movable relative to the substrate or, wherein the substrate is movable and wherein the engagement member is fixedly mounted on the substrate.

4. The apparatus of any one of the preceding claims, wherein the engagement member is configured to move the movable vehicle or housing in a repeated motion.

5. The apparatus of any one of the preceding claims, wherein the engagement member is configured to move the movable vehicle or housing in a circular motion, in an elliptical motion or in an oval-shaped motion.

6. The apparatus of any one of the preceding claims, wherein the engagement member and/or the substrate comprises a ramped or angled surface, for example a ramped or angled surface for engagement with the movable vehicle or housing.

7. The apparatus of any one of the preceding claims, wherein the engagement member and/or the substrate comprises a wedge shape.

8. The apparatus of any one of the preceding claims, wherein the engagement member and/or the substrate comprises a curved or concave surface, for example a curved or concave surface for engagement with the movable vehicle or housing.

9. The apparatus of any one of the preceding claims, wherein the engagement member and/or the substrate is powered by a motor, for example an AC motor, a DC motor, a brushless motor, a brushed motor, a servo motor or a stepper motor.

10. The apparatus of any one of the preceding claims, wherein at least a portion of the engagement member and/or the substrate is rotatable about a first axis.

11. The apparatus of claim 10, wherein the first axis is perpendicular to a direction of motion of the engagement member and/or wherein the apparatus further comprises an axle or shaft upon which the engagement member or the substrate is mounted, wherein the axle or shaft extends along the first axis.

12. The apparatus of any one of the preceding claims, wherein the engagement member and/or the substrate is configured to be indirectly coupled to the movable vehicle or housing, for example by exerting a force on the movable vehicle or housing to move the movable vehicle or housing.

13. The apparatus of any one of the preceding claims, wherein the engagement member is configured to be directly coupled to the movable vehicle or housing, for example by being mounted to a shaft or wheel of the movable vehicle or housing, optionally, wherein the engagement member is directly coupled to the movable vehicle or housing by shaping the engagement member so that it directly couples to the movable vehicle or housing, for example by the engagement member partially or wholly surrounding a portion of the movable vehicle or housing.

14. The apparatus of any one of the preceding claims, further comprising a retaining member configured to hold a portion of a movable vehicle or housing in place to allow the engagement member to move the movable vehicle or housing.

15. The apparatus of claim 14, wherein the retaining member is mounted upon the substrate and/or, wherein the retaining member extends perpendicularly, or substantially perpendicularly, to the substrate.
